# EUROPEAN PATENT SPECIFICATION

(11) **EP 1 101 773 B1**
(45) Date of publication and mention of the grant of the patent: **02.02.2005**
(21) Application number: 00124352.6
(22) Date of filing: 17.11.2000
(51) Int. Cl.: C08F 8/12

(54) **Saponified, alkoxyl group-containing ethylene-vinyl acetate copolymer, and its processed products**
Verseiftes Alkoxylgruppen enthaltendes Ethylen-Vinylacetat-Copolymer und daraus hergestellte Produkte
Copolymère éthylène-vinyle acétate saponifié renfermant des groupes alcoxyle et produits ainsi obtenus

(30) Priority: 18.11.1999 JP 32779399
(43) Date of publication of application: 23.05.2001
(73) Proprietor: KURARAY CO., LTD., Kurashiki-City Okayama Prefecture 710 (JP)
(72) Inventor: Yoshimi, Kazuyori, Kurashiki-City, Okayama-Pref. (JP); Kazeto, Osamu, Kurashiki-City, Okayama-Pref. (JP); Katayama, Masako, Kurashiki-City, Okayama-Pref. (JP)
(74) Representative: VOSSIUS & PARTNER

(56) References cited:
- EP-A- 0 457 262
- EP-A- 0 751 153
- EP-A- 0 884 352
- EP-A- 0 906 924
- DE-C- 506 148
- FR-A- 2 527 617
- US-A- 2 941 988
- US-A- 2 984 652
- US-A- 3 043 698
- US-A- 3 129 196
- DATABASE WPI Section Ch, Week 9323 Derwent Publications Ltd., London, GB; Class A18, AN 1987-201798 XP002160018 & JP 62 128754 A (KURARAY CO., LTD.), 11 June 1987 (1987-06-11)

## Description

The present invention relates to a saponified ethylene-vinyl acetate copolymer having good melt extrusion stability, drawdown resistance, interlayer adhesiveness and gas-barrier properties, and to its processed products having good surface smoothness.

As having good gas-barrier properties and melt processability, a saponified ethylene-vinyl acetate copolymer (hereinafter referred to as EVOH) is processed in melt into films, sheets, pipes, tubes, bottles and others, and its processed products are much used for food wrapping and packaging materials that are required to have good gas-barrier properties.

However, processed products of conventional EVOH are problematic in that their surfaces often have "streaks" running in the extrusion-processing direction, and the streaks worsen the appearance of the processed products. To solve the problem is an important technical theme in the art. The appearance failure caused by such "streaks" differs from that caused by "skin roughness", "fish eyes", "hard spots" and others discontinuously appearing on the surfaces of processed products and discussed in JP-A-197603/1986 and JP-A-71620/1997. Specifically, the streaks appear on the surfaces of processed products nearly continuously in the extrusion direction, and significantly detract from the commercial value of the processed products having them. This is a long-pending problem in the art, and to solve it is strongly desired.

The "streaks" to cause the appearance failure in EVOH processing are often seen in extrusion to form single-layered EVOH products, but are remarkable in coextrusion to form multi-layered products of EVOH and other thermoplastic resin. The appearance failure will happen to processed products immediately from the start of extrusion processing, but may often happen to them after a while of extrusion processing not appearing at the start.

Other technical problems with EVOH are:
· While it is processed through extrusion, the load to the extruder used often varies, and the thickness of the processed products thereby fluctuates;
· When it is processed into films or sheets or into parisons for pipes or bottles through extrusion, it often draws down from the die;
· When it is co-extruded with other thermoplastic resin, the resulting products could not ensure good interlayer adhesiveness,
and to solve the problems is desired.

The object of the present invention is to obtain EVOH having good melt extrusion stability, drawdown resistance, interlayer adhesiveness and gas-barrier properties, and to obtain processed EVOH products having good surface smoothness.

EVOH, which attains the object, contains from 0.1 to 3000 ppm of a compound having a molecular weight of at most 1000 and having at least one conjugated double bond, and has an alkoxyl group content of from 0.0005 to 1 mol%, an ethylene content of from 5 to 60 mol%, and a degree of saponification of at least 85 mol%.

One preferred embodiment of the EVOH of the invention contains from 10 to 5000 ppm, in terms of the free acid, of a higher fatty acid or its derivative. Another preferred embodiment thereof contains from 10 to 5000 ppm, in terms of the boron element, of a boron compound.

The invention also encompasses a single-layered extrusion product of the EVOH, and a multi-layered coextrusion product containing a layer of the EVOH.

Preferably, the EVOH of the invention is produced by adding a compound having a molecular weight of at most 1000 and having at least one conjugated double bond to an ethylene-vinyl acetate copolymer (hereinafter referred to as EVA) having been prepared through polymerization in the presence of an alkoxyl group-having polymerization initiator, followed by saponifying the copolymer.

Also preferably, the EVOH is produced by adding a compound having a molecular weight of at most 1000 and having at least one conjugated double bond to an EVA having been prepared through polymerization in the presence of an alkoxyl group-having polymerization initiator, then saponifying the copolymer, and thereafter adding thereto a higher fatty acid or its derivative and/or a boron compound.

Preferably, the single-layered extrusion product of the EVOH and the multi-layered coextrusion product containing a layer of the EVOH are produced by processing, in a mode of single-layer extrusion or multi-layer coextrusion, the EVOH having been prepared by adding a compound having a molecular weight of at most 1000 and having at least one conjugated double bond to an EVA prepared through polymerization in the presence of an alkoxyl group-having polymerization initiator, followed by saponifying the copolymer.

Also preferably, the single-layered extrusion product of the EVOH and the multi-layered coextrusion product containing a layer of the EVOH are produced by processing, in a mode of single-layer extrusion or multi-layer coextrusion, the EVOH having been prepared by adding a compound having a molecular weight of at most 1000 and having at least one conjugated double bond to an EVA prepared through polymerization in the presence of an alkoxyl group-having polymerization initiator, then saponifying the copolymer, and thereafter adding thereto a higher fatty acid or its derivative and/or a boron compound.

The alkoxyl group-containing EVOH of the invention contains, in the molecule, an alkoxyl group of the following formula (1): 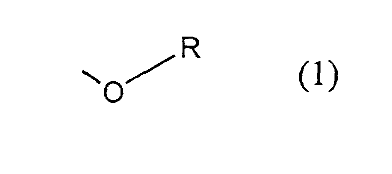 wherein R indicates an alkyl group having from 1 to 5 carbon atoms.

In the invention, the number of carbon atoms constituting the alkoxyl group must fall between 1 and 5 for attaining the intended effect of the invention. Preferably, it falls between 1 and 3, and is most preferably 1.

The ethylene content of the EVOH is at least 5 mol%, preferably at least 10 mol%, more preferably at least 20 mol%, and is at most 60 mol%, preferably at most 57 mol%, more preferably at most 55 mol%. EVOH having an ethylene content of smaller than 5 mol% is unfavorable, since its melt extrusion stability is not good and since its processed products could not have good surface smoothness and their gas-barrier properties at high humidity are poor. EVOH having an ethylene content over the defined range is also unfavorable, since its drawdown resistance, interlayer adhesiveness and gas-barrier properties are not good.

The degree of saponification of the vinyl acetate moiety in the EVOH of the invention is at least 85 mol%, preferably at least 95 mol%, more preferably at least 98 mol%, most preferably at least 99 mol%. EVOH having a degree of saponification of smaller than 85 mol% is unfavorable, since its melt extrusion stability and drawdown resistance are poor and since its processed products could not have good surface smoothness and their gas-barrier properties at low humidity and high humidity are poor.

The ethylene content and the degree of saponification referred to herein for the EVOH of the invention are meant to indicate a mean ethylene content and a mean degree of saponification, respectively, for a composition of two or more EVOHs that differ in the ethylene content and the degree of saponification.

The EVOH of the invention may be copolymerized with any other comonomers not interfering with the object of the invention. The comonomers include, for example, olefins such as propylene, 1-butene, isobutene, 4-methyl-1-pentene, 1-hexene, and 1-octene; unsaturated carboxylic acids such as itaconic acid, methacrylic acid, acrylic acid, maleic acid, and their salts, partial or complete esters, amides and anhydrides; and vinylsilane compounds such as vinyltrimethoxysilane; unsaturated sulfonic acids and their salts; alkylthiols; vinylpyrrolidones.

One embodiment of preparing the alkoxyl group-containing EVOH of the invention comprises copolymerizing ethylene and vinyl acetate with a comonomer having both an alkoxyl group and a copolymerizable vinyl group, such as an alkyl vinyl ether, an alkyl allyl ether, or an N-alkoxyalkyl(meth)acrylamide, followed by saponifying the resulting copolymer, for example, as in JP-B-21341/1969, JP-A-46202/1988 and JP-A-128754/1987.

When studying the method for producing the alkoxyl group-containing EVOH of the invention it has surprisingly been found that, I when an alkoxyl group-containing polymerization initiator is used in copolymerizing ethylene and vinyl acetate, then the alkoxyl group can be introduced into the resulting EVOH polymer.

Accordingly, for producing the alkoxyl group-containing EVOH of the invention, the method of using such an alkoxyl group-containing polymerization initiator to thereby introduce the alkoxyl group into the resulting polymer is preferred as ensuring better results. Specifically, in the preferred method, it is easy to control even a minor alkoxyl group content of the polymer, and the polymerization to give the polymer and the introduction of an alkoxyl group into the polymer can be effected both at a time. For these reasons, the method is advantageous, as being technically reasonable and inexpensive. Examples of the polymerization initiator are seen in JP-A-198509/1983, JP-A-206606/1983, JP-A-222102/1983, etc.

For the alkoxyl group-containing polymerization initiator for use herein, especially preferred are alkoxyl group-containing azo compounds of the following formula (2) : 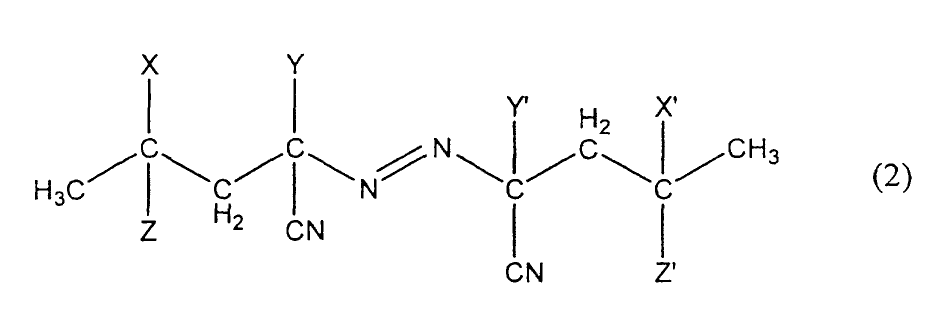 wherein X, X', Y and Y' each represent an alkyl group having from 1 to 5 carbon atoms; and Z and Z' each represent an alkoxyl group having from 1 to 5 carbon atoms.

The alkyl groups for X and X' and for Y and Y' may be the same or different, but are preferably the same in view of the effect of the compounds serving as a polymerization initiator and of the easiness in producing the compounds. The alkoxyl groups for Z and Z' may also be the same or different, but are preferably the same in view of the effect of the compounds serving as a polymerization initiator and of the easiness in producing the compounds. Preferred examples of the azo compounds are 2,2'-azobis(4-methoxy-2,4-dimethylvaleronitrile), 2,2'-azobis(4-ethoxy-2,4-diethylvaleronitrile) and 2,2'-azobis(4,4'-diethoxy-2-methylvaleronitrile). Of these, most preferred is 2,2'-azobis(4-methoxy-2,4-dimethylvaleronitrile) as its effect is high.

The alkoxyl group content of the EVOH of the invention must be at least 0.0005 mol%, but is preferably at least 0. 0007 mol%, more preferably at least 0.001 mol%. EVOH having an alkoxyl group content of smaller than 0.0005 mol% could not attain the object of the invention. The alkoxyl group content of the EVOH of the invention must be at most 1 mol%, but is preferably at most 0.5 mol%, more preferably at most 0.3 mol%. EVOH having an alkoxyl group content of larger than 1 mol% is unfavorable, since its drawdown resistance, interlayer adhesiveness and gas-barrier properties are not good.

In the method of producing EVOH in the presence of an alkoxyl group-containing polymerization initiator, the alkoxyl group content of the EVOH to be produced can be easily controlled by appropriately controlling and selecting the amount of the polymerization initiator to be used, the polymerization temperature, and the type and the amount of the polymerization solvent to be used. In the method of producing EVOH through copolymerization with an alkoxyl group-containing comonomer, the alkoxyl group content of the EVOH to be produced can be easily controlled by appropriately controlling the monomer ratio in copolymerization.

The melt flow rate (MFR) of the EVOH of the invention falls preferably between 0.1 and 100 g/10 min, more preferably between 0.2 and 20 g/10 min, even more preferably between 0.3 and 10 g/10 min, most preferably between 0.4 and 6 g/10 min. MFR is measured at 190°C and under a load of 2160 g, according to JIS K7210. For EVOH having a melting point of around 190°C or above 190°C, its MFR is measured under a load of 2160 g at different temperatures not lower than its melting point. The data are plotted on a semi-logarithmic graph with the horizontal axis indicating the reciprocal of the absolute temperature and the vertical axis indicating the logarithm of the MFR measured, and the value corresponding to 190°C is extrapolated from the curve of the thus-plotted data.

The compound having a molecular weight of at most 1000 and having at least one conjugated double bond, which is to be in the EVOH of the invention, is described in, for example, JP-A-197603/1986, JP-A-197604/1986 and JP-A-71620/1997. The compound is so constructed that at least two carbon-carbon double bonds constituting it are bonded to each other via one carbon-carbon single bond therebetween. The compound having at least one such conjugated double bond includes conjugated diene compounds having two carbon-carbon double bonds and one carbon-carbon single bond alternately bonded to each other; conjugated triene compounds having three carbon-carbon double bonds and two carbon-carbon single bonds alternately bonded to each other; and conjugated polyene compounds having more carbon-carbon double bonds and more carbon-carbon single bonds alternately bonded to each other. Conjugated triene compounds such as 2,4, 6-octatriene are within the scope of the compound. The conjugated double bond-having compound to be in the EVOH of the invention may have a plurality of independent conjugated double bonds in one molecule, including, for example, tung oil having three conjugated trienes in one molecule and others.

The conjugated double bond-having compound may have any other functional groups. The functional group includes, for example, a carboxyl group and its salts, a hydroxyl group, an ester group, a carbonyl group, an ether group, an amino group, an imino group, an amide group, a cyano group, a diazo group, a nitro group, a sulfone group, a sulfoxide group, a sulfide group, a thiol group, a sulfonic acid group and its salts, a phosphoric acid group and its salts, a phenyl group, a halogen atom, a double bond and a triple bond. The functional group may be bonded directly to the carbon atom of the conjugated double bond(s) in the compound, or may be remote from the conjugated double bond(s) therein. The multiple bond in the functional group may be in the position conjugate to the conjugated double bond(s) in the compound. For example, 1-phenylbutadiene having a phenyl group and sorbic acid having a carboxyl group are within the scope of the conjugated double bond-having compound defined herein. Specific examples of the conjugated double bond-having compound are 2,4-diphenyl-4-methyl-1-pentene, 1,3-diphenyl-1-butene, 2,3-dimethyl-1,3-butadiene, 4-methyl-1,3-pentadiene, 1-phenyl-1,3-butadiene, sorbic acid and myrcene.

The conjugated double bond to be in the conjugated double bond-having compound includes not only aliphatic-aliphatic conjugated double bonds such as those in 2,3-dimethyl-1,3-butadiene and sorbic acid but also aliphatic-aromatic conjugated double bonds such as those in 2,4-diphenyl-4-methyl-1-pentene and 1,3-diphenyl-1-butene. For ensuring better results, however, preferred are aliphatic-aliphatic conjugated double bond-having compounds for use in the invention. Also preferred are conjugated double bond-having compounds which additionally have a polar group such as a carboxyl group or its salt or a hydroxyl group. Most preferred are aliphatic-aliphatic conjugated double bond-having compounds additionally having such a polar group.

The conjugated double bond-having compound for use in the invention must have a molecular weight of at most 1000. If its molecular weight is larger than 1000, the compound worsens the extrusion stability of EVOH containing it and worsens the surface smoothness of processed EVOH products.

In view of its effect, the amount of the compound having a molecular weight of at most 1000 and having at least one conjugated double bond to be in the EVOH of the invention must be at least 0.1 ppm, but is preferably at least 1 ppm, more preferably at least 3 ppm, most preferably at least 5 ppm. Also in view of its effect, the amount of the compound to be in the EVOH must be at most 3000 ppm, but is preferably at most 2000 ppm, more preferably at most 1500 ppm, most preferably at most 1000 ppm.

For adding the conjugated double bond-having compound to EVOH, it is desirable that the compound is added to EVA after the polymer has been prepared through polymerization but before it is not as yet saponified, for ensuring good extrusion stability of the EVOH containing the compound and ensuring good surface smoothness of processed EVOH products. Though not clear, the reason will be because the conjugated double bond-having compound thus added to EVA could protect the polymer from being deteriorated before and/or during the step of saponifying the polymer.

For better results, it is desirable that a higher fatty acid or its derivative is added to the EVOH of the invention. The higher fatty acid usable for this purpose preferably has at least 8 carbon atoms, more preferably at least 10 carbon atoms, most preferably at least 12 carbon atoms, but preferably has at most 30 carbon atoms, more preferably at most 25 carbon atoms, most preferably at most 20 carbon atoms.

Derivatives of such higher fatty acids include amides, esters and salts. Specific examples of the higher fatty acid derivatives are palmitamide, stearamide, oleamide, linolic amide, linolenic amide, ethylene-bis-stearamide, ethylene-bis-oleamide, sodium stearate, calcium stearate and magnesium linolenate. Of such higher fatty acids and their derivatives, preferred are higher fatty acid amides and salts of higher fatty acids; more preferred are higher fatty acid amides, and alkali metal salts and alkaline earth metal salts of higher fatty acids; and most preferred are higher fatty acid amides. Two or more selected from such higher fatty acids and their derivatives may be combined for use in the invention.

In view of its effect, the overall amount of the higher fatty acid or its salt that may be in the EVOH of the invention is preferably at least 10 ppm, in terms of the free acid, more preferably at least 50 ppm, even more preferably at least 100 ppm, but is preferably at most 5000 ppm, more preferably at most 2000 ppm, even more preferably at most 1000 ppm.

In view of its effect, such a higher fatty acid or its derivative is preferably added to EVOH after formed from EVA through saponification. In case where it is added to EVA not saponified, the compound added will be ineffective.

For further better results, the EVOH of the invention preferably contains a boron compound. The boron compound usable herein includes boric acids, borates, salts of boric acids and boron hydrides. Concretely, the boric acids include orthoboric acid, metaboric acid and tetraboric acid; the borates include triethyl borate and trimethyl borate; the salts of boric acids include alkali metal salts and alkaline earth metal salts of the boric acids mentioned above, as well as borax, etc. Of those boron compounds, preferred is orthoboric acid. Two or more of the boron compounds mentioned above may be combined for use herein.

The boron compound content of the EVOH of the invention is preferably at least 10 ppm, in terms of the boron element, more preferably at least 30 ppm, even more preferably at least 50 ppm, most preferably at least 100 ppm, but is preferably at most 5000 ppm, more preferably at most 3000 ppm, even more preferably at most 2000 ppm, most preferably at most 1500 ppm. If its boron compound content is smaller than 10 ppm in terms of the boron element, the melt extrusion stability, the drawdown resistance and the interlayer adhesiveness of the EVOH may be poor; but if larger than 5000 ppm in terms of the boron element, it may worsen the surface smoothness of processed EVOH products and may increase the extruder load fluctuation in melt extrusion of the EVOH, and, as a result, the EVOH may lose extrusion stability.

In view of its effect, such a boron compound is preferably added to EVOH after formed from EVA through saponification. In case where it is added to EVA not saponified, the compound added will be ineffective.

The EVOH of the invention may optionally contain additives not interfering with the object of the invention. The additives include heat stabilizers, UV absorbents, antioxidants, colorants, fillers, andresins except EVOH (e.g., polyamide, polyolefins, polyesters, polystyrenes).

The EVOH of the invention may be effective in a mode of extrusion, specially in a mode of multi-layer coextrusion with any other thermoplastic resin. Examples of the single-layered extrusion products and multi-layered coextrusion products of the invention are films, sheets, pipes, tubes and bottles.

Examples of the thermoplastic resin capable of being co-extruded along with the EVOH of the invention are polyolefins, polyamides, polyesters, polystyrenes, etc. The polyolefins include high-density, middle-density and low-density polyethylenes; polyethylenes copolymerized with any of vinyl acetate, acrylates, butene, hexene and 4-methyl-1-pentene; ionomers; homopolypropylenes or polypropylenes copolymerized with olefins such as ethylene, butene, hexene and 4-methyl-1-pentene; poly-1-butenes; poly-4-methyl-1-pentenes; modified polyolefins prepared by grafting the polyolefins mentioned above with unsaturated carboxylic acids such as maleic anhydride, etc. Of those polyolefins, preferred are carboxylic acid-modified polyolefins in view of their effect. The carboxylic acid-modified polyolefins are meant to indicate polyolefins having a carboxyl group in the molecule, and include, for example, polyolefins modified through grafting with any of α,β-unsaturated carboxylic acids or their anhydrides, and random copolymers of olefin monomers and α,β-unsaturated carboxylic acids or their anhydrides.

The polyolefins to be the base of such carboxylic acid-modified polyolefins include polyethylenes {low-density polyethylene (LDPE), linear low-density polyethylene (LLDPE), very-low-density polyethylene (VLDPE)}, polypropylenes, copolypropylenes, EVAs, ethylene-(meth)acrylate copolymer and other various types of polyolefins. α,β-unsaturated carboxylic acids and their anhydrides to be used for modifying the polyolefins include acrylic acid, methacrylic acid, maleic acid, itaconic acid, maleic anhydride and itaconic anhydride. Of those, preferred is maleic anhydride.

The content of the α,β-unsaturated carboxylic acid or its anhydride to be in the modified polyolefins preferably falls between 0.01 and 5 % by weight, more preferably between 0.03 and 4 % by weight, even more preferably between 0.05 and 3 % by weight, in view of the effect of the modified polyolefins. 100 % polyolefins modified with such an α,β-unsaturated carboxylic acid or its anhydride within the defined range of the content may be used in the invention, but, in view of its cost, preferred for use herein is a blend of a polyolefin modified with an α,β-unsaturated carboxylic acid or its anhydride to a high degree of the content and a non-modified polyolefin, which is so controlled that the content of the α,β-unsaturated carboxylic acid or its anhydride in the final polyolefin blend should fall within the defined range of the content. Typically like ionomers, all or a part of the carboxyl groups in the polyolefins may be in the form of their metal salts.

The polyamides include, for example, nylon-6, nylon-6/12, nylon-6/6,6, nylon-11, nylon-12, etc. Of those polyamides, preferred are copolyamides having a capramide component, especially nylon-6/6,6, in view of their effect.

The polyesters typically include polyethylene terephthalate, polybutylene terephthalate, polyethylene (terephthalate/isophthalate) and
poly(ethylene/cyclohexanedimethylene)terephthalate. These polymers may be copolymerized with any of diols such as ethylene glycol,butylene glycol, cyclohexanedimethanol, neopentyl glycol and pentanediol; dicarboxylic acids such as isophthalic acid, benzophenone-dicarboxylic acid, diphenylsulfone-dicarboxylic acid, diphenylmethane-dicarboxylic acid, propylene-bis(phenylcarboxylic acid), diphenyloxide-dicarboxylic acid, oxalic acid, malonic acid, succinic acid, glutaric acid, adipic acid, pimelic acid, suberic acid, azelaic acid, sebacic acid and diethylsuccinic acid.

The polystyrenes include not only styrene homopolymers but also styrene copolymers with any other monomers except styrene, as well as blends of such polystyrenes with any other resins prepared by polymerizing monomers except styrene. Concretely, they include styrene homopolymers, so-called HIPS (high-impact polystyrenes) containing minor rubber components, ABS (acrylonitrile-butadiene-styrene copolymers), AS (acrylonitrile-styrene copolymers), styrene-diene copolymers and their hydrogenated derivatives and styrene-maleic anhydride copolymers.

The effect of the EVOH of the invention is remarkable when it is co-extruded with any other thermoplastic resin into multi-layered coextrusion products. Its effect is especially remarkable when the EVOH is co-extruded with an unsaturated carboxylic acid-grafted polyolefin into multi-layered coextrusion products. For the modified polyolefin, preferred is an unsaturated carboxylic acid-grafted polyethylene, especially an unsaturated carboxylic acid-grafted, linear low-density polyethylene having a density of from 0.88 to 0.93 g/cm³ and a melt flow rate (MFR, at 190°C under 2160°C) of from 1 to 7 g/10 min.

The EVOH of the invention can be processed in melt into various products such as films, sheets, pipes, tubes, bottles and gasoline tanks. The products may be ground and recycled. The EVOH films or sheets may be monoaxially or biaxially stretched into oriented films or sheets. If desired, they may be thermo-formed into trays, cups and other containers. For melt-processing the EVOH of the invention, employable is any processing method of, for example, extrusion processing with a flat die, inflation molding and blow molding. The melt-processing temperature for the EVOH may fall between 150 and 300°C, but preferably between 160 and 280°C, most preferably between 170 and 250°C, for ensuring the effect of the invention.

### EXAMPLES

The invention is described in more detail with reference to the following Examples, which, however, are not intended to restrict the scope of the invention. In the following Examples and Comparative Examples, the samples prepared were analyzed, tested and evaluated according to the methods mentioned below.

### (1) Methods for Analyzing Samples:

### (1-1) Determination of alkoxyl group content, ethylene content and degree of saponification:

In a Soxhlet extractor, a sample of EVOH to be analyzed is extracted by the use of a solvent capable of dissolving the additives in the EVOH but substantially not dissolving the EVOH itself (for example, chloroform), whereby the additives are fully extracted out and removed from the EVOH sample. The thus-treated EVOH is then dissolved in dimethylsulfoxide (DMSO), and the resulting solution is put into acetone to precipitate the EVOH therein. Thus is obtained a purified EVOH. The purified EVOH is analyzed through nuclear magnetic resonance (NMR) to determine its alkoxyl group content, ethylene content and degree of saponification. Prior to NMR, one or two drops of trifluoroacetic acid (TFA) are added to the DMSO-d₆ solution of EVOH, and the resulting solution is immediately subjected to NMR.

The alkoxyl group content and the ethylene content of EVOH referred to herein are meant to indicate the overall content of alkoxyl group and that of the ethylene, respectively, in all monomer units constituting the polymer EVOH. For example, for the sample of an alkoxyl group-containing EVOH, the amount of the alkoxyl group-containing units or that of the ethylene units to the overall amount of the ethylene units, vinyl alcohol units, vinyl acetate units and the alkoxyl group-containing units constituting the sample is represented in terms of "mol%", and this indicates the alkoxyl group content or the ethylene content of the EVOH. For the degree of saponification of EVOH, the amount of the vinyl alcohol units constituting the polymer to the overall amount of the vinyl alcohol units and the vinyl acetate units constituting it is represented in terms of "mol%, and this indicates the degree of saponification of the polymer.
Apparatus used: JEOL's ultra-conductive NMR, Lambda 500.
Solvent: DMSO-d₆ (with TFA drops added).
Concentration: 5 % by weight.
Temperature: 80°C.
Resonance frequency: ¹H, 500 MHz.
Flip angle: 45°.
Pulse delay time: 4.0 sec.
Accumulation: 6000 times.

### (1-2) Determination of the content of conjugated double bond-containing compound and that of higher fatty acid and its derivative:

A solvent capable of dissolving the intended conjugated double bond-containing compound or the intended fatty acid and its derivatives, but substantially not dissolving EVOH is selected. From a sample of EVOH to be analyzed, the intended compound is extracted out into the thus-selected solvent, and the resulting extract is analyzed in a method suitable to the compound to thereby quantitatively determine the intended conjugated double bond-containing compound or the intended fatty acid and its derivatives in the sample.

### (1-3) Determination of boron compound content:

A sample of EVOH to be analyzed is put into a ceramic crucible, and ashed in an electric furnace. The resulting ash is dissolved in 200 ml of an aqueous solution of 0.01 N nitric acid, and the solution is analyzed through atomic spectrometry to thereby quantitatively determine the boron compound content of the sample in terms of the boron element thereof.

### (2) Methods for Testing and Evaluating Samples:

### (2-1) Surface smoothness:

Used is a coextrusion film-forming apparatus equipped with two extruders (one is for EVOH, having an opening diameter of 50 mmφ; and the other is for other thermoplastic resin, having an opening diameter of 65 mmφ), a selector plug-fitted feed block, and a T-die having a lip-to-lip distance of 620 mm. A single-layered melt of EVOH, or a multi-layered melt of EVOH and other thermoplastic resin is extruded out through the apparatus and formed into a film on a 90 mmφ chromium-plated mirror roll. In this step, the air gap (that is, the distance between the die lip and the EVOH-receiving surface of the first roll) is 20 cm. Before the layer constitution of the film to be formed is changed, the selector plug of the feed block is changed.

One hour after the start of the film-forming test, the film formed is sampled and its appearance is macroscopically checked to evaluate the surface smoothness of the film sample. Five panelists check the film sample, and their answers are averaged. The film evaluation is made according the following criteria:
A: No streaks are found, and the commercial value of the film is good.
B: Slight streaks are found, but they are negligible. The commercial value of the film is good.
C: Streaks are found, and the film has little commercial value.
D: Streaks are remarkable, and the film has no commercial value.

### (2-2) Melt extrusion stability:

A single-layered extrusion film or a two-layered coextrusion film is produced in the same manner as in (2-1). One hour after the start of the film-forming test, the screw load fluctuation in the extruder is monitored. From this, the melt extrusion stability of the EVOH tested is determined according to the following criteria:
A: The screw load fluctuation is 2 amperes or so, and is extremely small. This causes no trouble in film-forming operation.
B: The screw load fluctuation falls between 4 and 5 amperes or so, and is small. This causes little trouble in film-forming operation.
C: The screw load fluctuation falls between 7 and 8 amperes or so, and is relatively large. This causes some trouble in film-forming operation.
D: The screw load fluctuation is 10 amperes or more, and is large. This causes significant trouble in film-forming operation.

### (2-3) Drawdown resistance:

A single-layered extrusion film or a two-layered coextrusion film is produced in the same manner as in (2-1). One hour after the start of the film-forming test, the condition of the EVOH melt extruded out through the die lip is checked. From this, the drawdown resistance of the EVOH tested is determined according to the following criteria:
A: Drawdown is negligible, and causes no trouble in film-forming operation.
B: Slight drawdown is seen, but causes little trouble in film-forming operation.
C: Drawdown is seen, and causes some trouble in film-forming operation.
D: Drawdown is remarkable, and causes significant trouble in film-forming operation.

### (2-4) Interlayer adhesiveness:

One hour after the start of the film-forming test as above, the two-layered coextrusion film is sampled. The film sample is well conditioned in an atmosphere of 20°C and 65 % RH, and cut in the extrusion direction into a strip having a length of 150 mm and a width of 15 mm. Using a Shimadzu Seisakusho's tensile tester, Autograph DCS-50M Model, the strip is tested at a pulling rate of 250 mm/min in the atmosphere of 20°C and 65 % RH to measure its peeling strength.

### (2-5) Gas-barrier properties (oxygen transmission rate):

The samples prepared in single-layer extrusion or two-layer coextrusion as in the above are well conditioned in an atmosphere of 20°C and 85 % RH. Using a Modern Controls' oxygen transmission meter, MOCON OX-TRAN 2/20 Model, the samples are tested under the condition of 20°C and 85 % RH according to JIS K7126 (isobaric method).

### Example 1

20000 parts by weight of vinyl acetate, 2000 parts by weight of methanol, and 10 parts by weight of 2,2'-azobis-(4-methoxy-2,4-dimethylvaleronitrile) serving as a polymerization initiator were put into a polymerization tank equipped with a condenser and a stirrer, and then purged with nitrogen with stirring. Ethylene was introduced into the tank with controlling the inner temperature to be 60°C and the ethylene pressure to be 45 kg/cm². With that, the monomers were polymerized for 4 hours with stirring at the controlled temperature and pressure. Next, 10 parts by weight (corresponding to 0.05 % by weight of vinyl acetate) of 2,4-diphenyl-4-methyl-1-pentene (DPMP) was dissolved in methanol to prepare a 1.5 wt.% solution, and the solution was added to the reaction system. The degree of polymerization was 45 % based on the vinyl acetate fed into the tank. The tank was degassed to have normal pressure, and the non-reacted ethylene was evaporated away.

Next, the methanol solution was continuously run into a purging column filled with raschig rings, in the downward direction from its top, while a vapor of methanol was jetted into the column through its bottom, whereby the non-reacted vinyl acetate monomer was purged away along with the methanol vapor from the column through its top and removed via the condenser connected with the column. As a result, obtained was a methanol solution of 40 wt.% EVA having a non-reacted vinyl acetate content of 0.005 % by weight.

The methanol solution of EVA was fed into a saponification reactor, to which was added sodium hydroxide/methanol solution (85 g/liter) in an amount of 0.5 equivalents based on the vinyl acetate moiety of the copolymer. To this was added methanol so that the copolymer concentration in the solution was controlled to be 15 % by weight. This was heated at 60°C and reacted for about 5 hours while nitrogen gas was introduced into the reactor. Next, this was neutralized with acetic acid and the reaction was stopped. The resulting product was taken out of the reactor and left at room temperature, and it precipitated as granules. The granules were dewatered through centrifugation. A large amount of water was added thereto, and the granules were again dewatered. This operation was repeated.

The resulting granules were treated in an aqueous solution containing acetic acid and orthoboric acid (OBA) (0.5 g of acetic acid and 0.35 g of orthoboric acid were dissolved in 1 liter of water), for which the bath ratio was 20. After having been thus treated, the granules were dried, and then mixed with fine powder of ethylene-bis (stearamide) (EBSA - this is bisamide of ethylenediamine and stearic acid) in a blender, and then pelletized through an extruder.

The resulting EVOH pellets were treated with chloroform for 48 hours in a Soxhlet extractor, whereby the additives were extracted out and removed from the EVOH and the EVOH was purified. The thus-purified EVOH was subjected to NMR spectrometry. Its NMR chart had a peak based on the hydrogen atom of the methylene group at around 1 to 1.8 ppm; a peak based on the hydrogen atom of the methyl group constituting the vinyl acetate unit at around 2 ppm; a peak based on the hydrogen atom of the methoxy group at around 3 to 3.15 ppm; and a peak based on the hydrogen atom of the methine group constituting the vinyl alcohol unit at around 3.15 to 4.15 ppm. The data seen on the NMR chart confirmed that the ethylene unit content of the copolymer EVOH was 32 mol%, the degree of saponification thereof was 99.5 mol%, and the methoxy group-containing unit content thereof was 0.01 mol%.

The compounds in the extract separated through Soxhlet extraction were quantified through high-performance liquid chromatography, based on the calibration curves of the standard chemicals for them. As a result, the 2,4-diphenyl-4-methyl-1-pentene (DPMP) content of the EVOH was 230 ppm and the ethylene-bis(stearamide) (EBSA) content thereof was 300 ppm. The boron compound content of the EVOH was obtained according to the method mentioned above, and was 260 ppm in terms of the boron element.

According to the test methods mentioned above, the EVOH was formed into a single-layered film having a thickness of 20 µm, and the film was tested and evaluated. The data of the EVOH composition analyzed and those of the EVOH film tested are given in Table 1 and Table 2.

### Example 2

EVOH pellets were prepared and analyzed in the same manner as in Example 1. In this, however, sorbic acid (SA) and not 2,4-diphenyl-4-methyl-1-pentene (DPMP) was used. Also in the same manner as in Example 1, the EVOH pellets were formed into a single-layered film, and the film was tested and evaluated. The data of the EVOH composition analyzed and those of the EVOH film tested are given in Table 1 and Table 2.

### Example 3

EVOH pellets were prepared and analyzed in the same manner as in Example 2. In this, however, magnesium stearate (SAMg) and not ethylene-bis(stearamide) (EBSA) was used. In the same manner as in Example 1, the EVOH pellets were formed into a single-layered film, and the film was tested and evaluated. The data of the EVOH composition analyzed and those of the EVOH film tested are given in Table 1 and Table 2.

### Example 4

EVOH pellets were prepared and analyzed in the same manner as in Example 2. In this, however, orthoboric acid was not used. In the same manner as in Example 1, the EVOH pellets were formed into a single-layered film, and the film was tested and evaluated. The data of the EVOH composition analyzed and those of the EVOH film tested are given in Table 1 and Table 2.

### Example 5

The EVOH prepared in Example 2 was co-extruded along with maleic anhydride-grafted linear low-density polyethylene (MA-LLDPE, having a maleic anhydride content of 0.2 % by weight, an MFR of 1.8 g/10 min, and a density of 0.91 g/cm³), into a two-layered film. The extruder temperature and the die temperature were both 220°C. In the two-layered film having an overall thickness of 50 µm, the thickness of the EVOH layer was 20 µm and that of the MA-LLDPE was 30 µm. The film was tested and evaluated according to the methods mentioned above. The data of the EVOH composition analyzed and those of the two-layered film tested are given in Table 1 and Table 2.

### Example 6

A two-layered film was formed in the same manner as in Example 5, and tested. In this, however, the EVOH prepared in Example 3 was used. The data of the EVOH composition analyzed and those of the two-layered film tested are given in Table 1 and Table 2.

### Example 7

A two-layered film was formed in the same manner as in Example 5, and tested. In this, however, the EVOH prepared in Example 4 was used. The data of the EVOH composition analyzed and those of the two-layered film tested are given in Table 1 and Table 2.

### Example 8

EVOH pellets were prepared and analyzed in the same manner as in Example 1. In this, however, ethylene-bis(stearamide) (EBSA) was not added to EVOH. In the same manner as in Example 1, the EVOH pellets were formed into a single-layered film, and the film was tested and evaluated. The data of the EVOH composition analyzed and those of the EVOH film tested are given in Table 1 and Table 2.

### Example 9

EVOH pellets were prepared and analyzed in the same manner as in Example 1. In this, however, the polymerization initiator used was azobisisobutyronitrile and not 2,2'-azobis-(4-methoxy-2,4-dimethylvaleronitrile); the comonomer was N-ethoxymethylacrylamide; and the N-ethoxymethylacrylamide content in the EVOH was 0.5 mol%. In the same manner as in Example 1, the EVOH pellets were formed into a single-layered film, and the film was tested and evaluated. The data of the EVOH composition analyzed and those of the EVOH film tested are given in Table 1 and Table 2.

### Example 10

A two-resin three-layered film was formed through coextrusion in the same manner as in Example 5, and tested. In this, however, copolyamide 6/66 (nylon 6/66, Ube Kosan's UBE Nylon 5033B, having a melting point of 195°C and a relative viscosity of 4.40 in 98 % sulfuric acid) and not MA-LLDPE was used; and the extruder temperature and the die temperature were both 240°C. The film had an overall thickness of 50 µm, and had a constitution of nylon 6/66 (15 µm)/EVOH (20 µm)/nylon 6/66 (15 µm). The data of the EVOH composition analyzed and those of the three-layered film tested are given in Table 1 and Table 2.

### Example 11

Vinyl acetate was introduced into a 800 liter polymerization tank equipped with a vertical, 12-tubular, wetted wall heat exchanger having a heating area of 5 m², all through the heat exchanger at a rate of 35 kg/hr . Along with it, ethylene, 2,2'-azobis-(4-methoxy-2,4-dimethylvaleronitrile) serving as a polymerization initiator and methanol serving as a polymerization solvent were directly introduced into the tank at a rate of 6.5 kg/hr, 17 g/hr and 2.5 kg/hr, respectively. With that, the monomers were polymerized at a polymerization temperature of 65°C and under a polymerization pressure of 46 kg/cm² to prepare EVA. A coolant (aqueous 30 wt.% methanol solution) at -3°C was circulated outside the heat exchanger, at a rate of 2.0 m³/hr. Precisely, vinyl acetate having been introduced into the heat exchanger was film-wise led down therein, and contacted with the vapor of ethylene led thereinto from the polymerization tank. Thus having absorbed and dissolved ethylene in the heat exchanger, vinyl acetate was then led into the polymerization tank, and mixed with the liquid existing therein. In that manner, the monomers were continuously polymerized in the tank to give a polymerization mixture at a rate of 43 kg/hr.

The polymerization mixture thus formed was continuously taken out of the polymerization tank through its bottom, with a methanol solution of sorbic acid (SA) being added thereto at the outlet of the tank to remove the vaporized non-reacted ethylene from the mixture. The resulting methanol solution of EVA was continuously run into a purging column filled with raschig rings, in the downward direction from its top, while a vapor of methanol was jetted into the column through its bottom, whereby the non-reacted vinyl acetate was purged away along with the methanol vapor from the column through its top and removed via the condenser connected with the column. As a result, obtained was a methanol solution of 33 wt.% EVA. The methanol solution of EVA was fed into a saponification reactor, to which was added sodium hydroxide/methanol solution (80 g/liter) in an amount of 0.55 equivalents based on the vinyl acetate moiety of the copolymer EVA. To this was added methanol so that the EVA concentration in the solution was controlled to be 15 % by weight. This was heated at 60°C and reacted for 5 hours while nitrogen gas was introduced into the reactor. Next, this was neutralized with acetic acid and the reaction was stopped. The resulting product was taken out of the reactor and left at room temperature, and it precipitated as granules. The granules were dewatered through centrifugation. A large amount of water was added thereto, and the granules were again dewatered. This operation was repeated.

The resulting granules were treated in an aqueous solution containing acetic acid and orthoboric acid (0.55 g of acetic acid and 0.4 g of orthoboric acid were dissolved in 1 liter of water), for which the bath ratio was 25. After having been thus treated, the granules were dried, and then mixed with fine powder of ethylene-bis (oleamide) (EBOA - this is bisamide of ethylenediamine and oleic acid) in a blender, and then pelletized through an extruder set at 215°C.

The resulting EVOH pellets were treated with chloroform for 48 hours in a Soxhlet extractor, whereby the additives were extracted out and removed from the EVOH and the EVOH was purified. The thus-purified EVOH was subjected to NMR spectrometry. The data seen on the NMR chart confirmed that the ethylene unit content of the EVOH was 31 mol%, the degree of saponification thereof was 99.6 mol%, and the methoxy group-containing unit content thereof was 0.012 mol%.

The compounds in the extract separated through Soxhlet extraction were quantified through high-performance liquid chromatography, based on the calibration curves of the standard chemicals for them. As a result, the SA content of the EVOH was 200 ppm and the EBOA content thereof was 350 ppm. The orthoboric acid content of the EVOH pellets was obtained according to the method mentioned above, and was 220 ppm in terms of the boron element.

The EVOH pellets were co-extruded into a two-layered film in the same manner as in Example 5, and the film was tested and evaluated according to the test methods mentioned above. Its surface smoothness, melt-extrusion stability and drawdown resistance were all good and in rank A. The film was not peeled, and its interlayer adhesiveness was good. The oxygen permeation rate through the film was 1.1 ml/m²·day·atom, and its gas-barrier properties were good. The data of the EVOH composition analyzed and those of the three-layered film tested are given in Table 1 and Table 2.

### Comparative Example 1

EVOH pellets were prepared and analyzed in the same manner as in Example 1. In this, however, the polymerization initiator used was azobisisobutyronitrile and not 2,2'-azobis-(4-methoxy-2,4-dimethylvaleronitrile); and 2,4-diphenyl-4-methyl-1-pentene (DPMP), ethylene-bis(stearamide) (EBSA, bisamide of ethylenediamine and stearic acid) and orthoboric acid (OBA) were not used. Also in the same manner as in Example 1, the EVOH pellets were formed into a single-layered film, and the film was tested and evaluated. The data of the EVOH composition analyzed and those of the EVOH film tested are given in Table 1 and Table 2.

The peak for the hydrogen atom of the methoxy group appearing in the range, 3.00 to 3.15 ppm on the NMR chart of the EVOH prepared Example 1 was not seen in the NMR chart of the EVOH prepared herein.

### Comparative Example 2

EVOH pellets were prepared and analyzed in the same manner as in Example 1. In this, however, the polymerization initiator used was azobisisobutyronitrile and not 2,2'-azobis-(4-methoxy-2,4-dimethylvaleronitrile). Also in the same manner as in Example 1, the EVOH pellets were formed into a single-layered film, and the film was tested and evaluated. The data of the EVOH composition analyzed and those of the EVOH film tested are given in Table 1 and Table 2.

The peak for the hydrogen atom of the methoxy group appearing in the range, 3.00 to 3.15 ppm on the NMR chart of the EVOH prepared Example 1 was not seen in the NMR chart of the EVOH prepared herein.

### Comparative Example 3

EVOH pellets were prepared and analyzed in the same manner as in Example 1. In this, however, 2,4-diphenyl-4-methyl-1-pentene (DPMP) was not added to EVOH. Also in the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 4

EVOH pellets were prepared and analyzed in the same manner as in Example 1. In this, however, the amount of 2,4-diphenyl-4-methyl-1-pentene (DPMP)added to EVOH was 3200 ppm. Also in the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 5

EVOH pellets were prepared and analyzed in the same manner as in Example 9. In this, however, the monomers were so copolymerized that the N-ethoxymethylacrylamide content of the resulting copolymer could be 1.5 mol%. In the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 6

EVOH pellets were prepared and analyzed in the same manner as in Example 1. In this, however, the monomers were so copolymerized that the ethylene content of the resulting copolymer EVOH could be 65 mol%. Also in the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 7

Polymer pellets (polyvinyl alcohol pellets) were prepared and analyzed in the same manner as in Example 1. In this, however, ethylene was not used. Like in Example 1, forming the pellets into a single-layered polyvinyl alcohol film was tried. However, the surface of the film being formed herein was not good from the start of the film-forming operation. Accordingly, immediately after the film was sampled, the extruder device was stopped. The data of the polyvinyl alcohol composition analyzed and those of the polyvinyl alcohol film tested are given in Table 1 and Table 2.

### Comparative Example 8

EVOH pellets were prepared and analyzed in the same manner as in Example 1. In this, however, the condition for saponification was so varied that the degree of saponification of the resulting EVOH could be 80 mol%. Also in the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 9

EVOH pellets were prepared and analyzed in the same manner as in Example 1. In this, however, α-methylstyrene polymer having a molecular weight of 1100 (MS polymer- this has a conjugated double bond at the terminal of the molecule) and not 2,4-diphenyl-4-methyl-1-pentene (DPMP) was used. Also in the same manner as in Example 1, the EVOH pellets were formed into a single-layered film, and the film was tested and evaluated. The data of the EVOH composition analyzed and those of the EVOH film tested are given in Table 1 and Table 2.

### Comparative Example 10

A two-layered film was formed in the same manner as in Example 5, and tested. In this, however, the EVOH prepared in Comparative Example 1 was used. The data of the EVOH composition analyzed and those of the two-layered film tested are given in Table 1 and Table 2.

### Comparative Example 11

A two-resin three-layered film was formed in the same manner as in Example 10, and tested. In this, however, the EVOH prepared in Comparative Example 2 was used. The data of the EVOH composition analyzed and those of the three-layered film tested are given in Table 1 and Table 2.

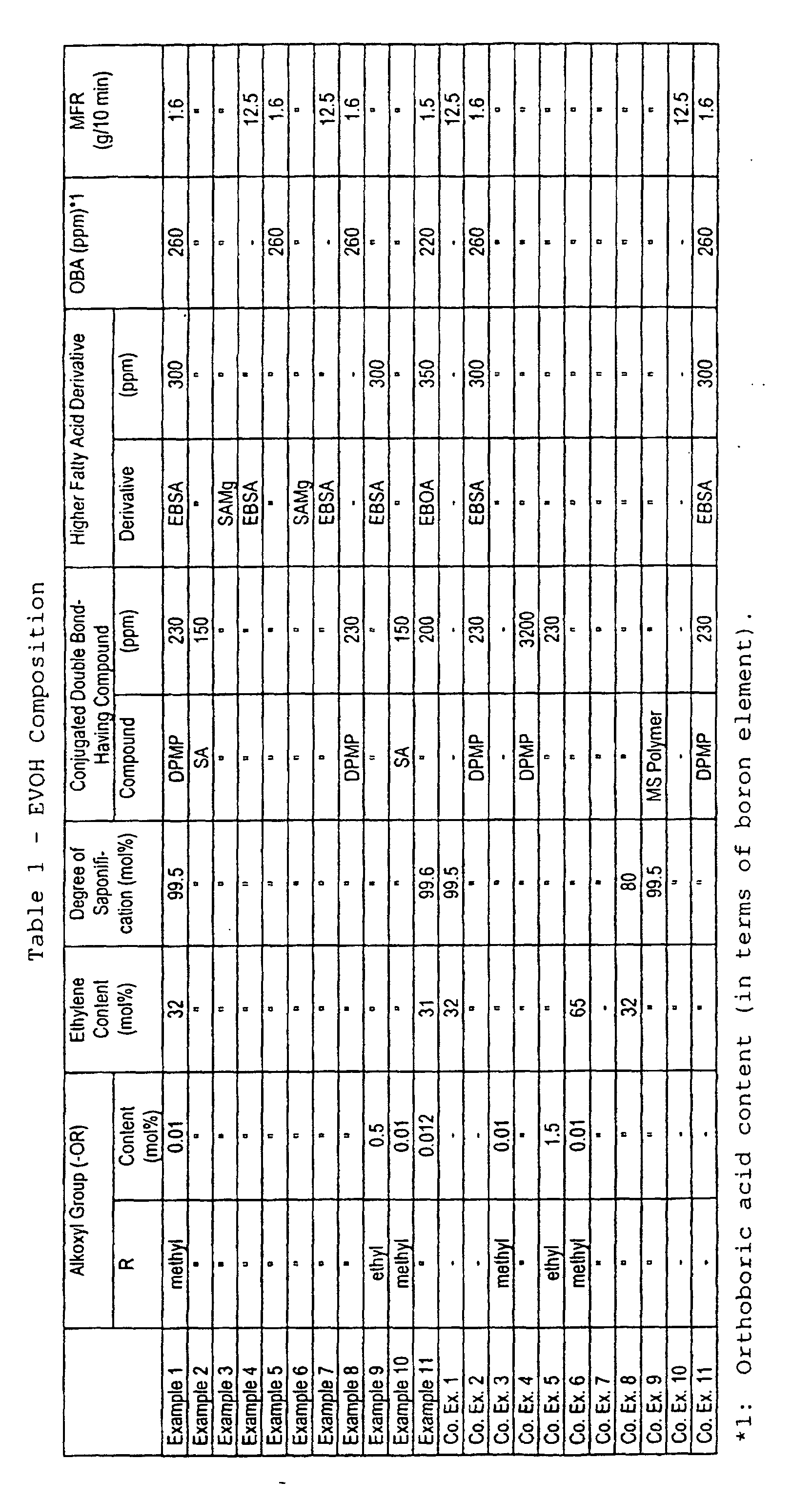

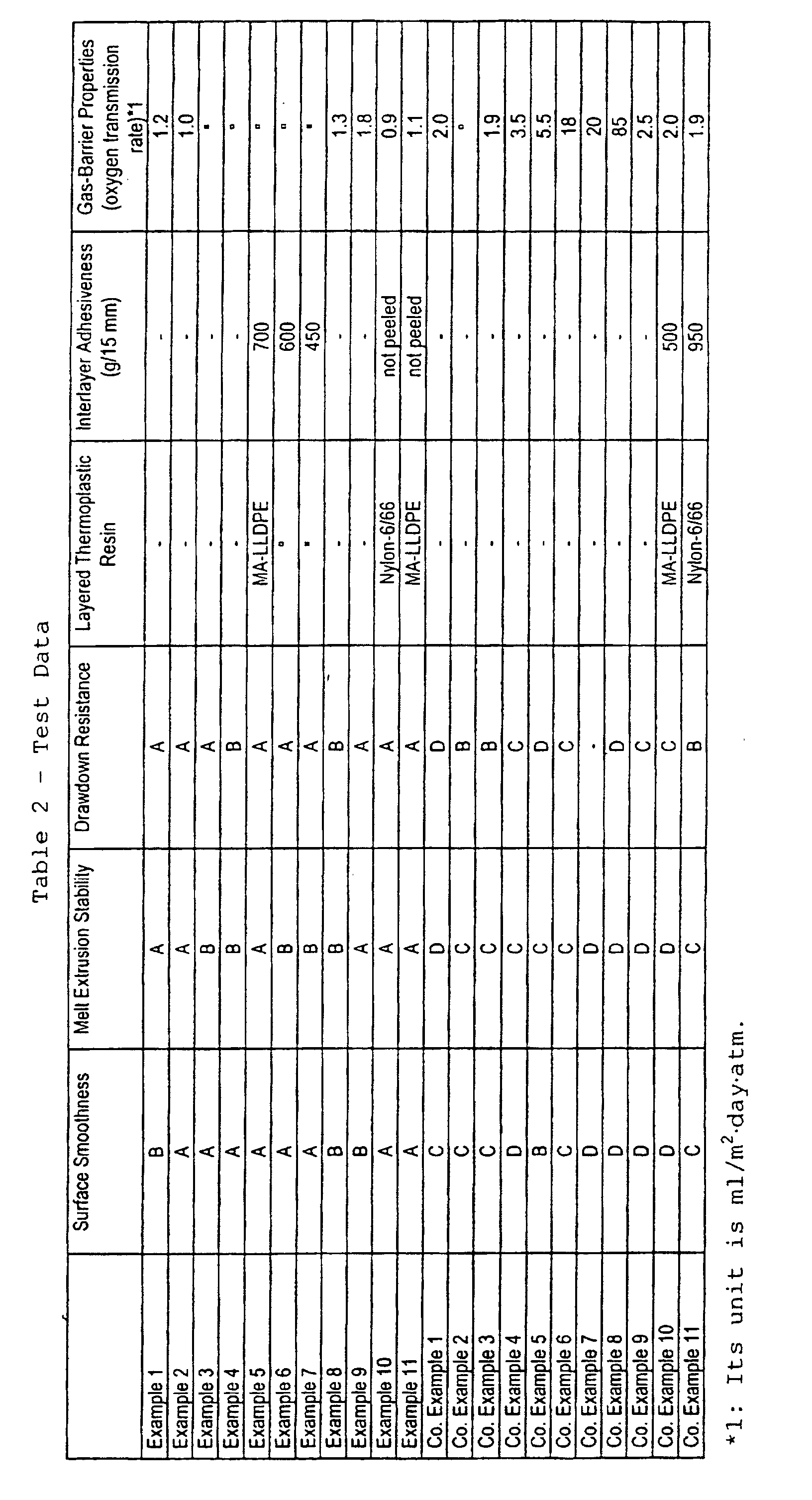

As described in detail with reference to its preferred embodiments, the alkoxyl group-containing EVOH of the invention has the following advantages:
<1> Its processed products have good surface smoothness;
<2> It has good melt extrusion stability;
<3> It has good drawdown resistance;
<4> It has good interlayer adhesiveness; and
<5> It has good gas-barrier properties.

## Claims

1. A saponified ethylene-vinyl acetate copolymer, which contains from 0.1 to 3000 ppm of a compound having a molecular weight of at most 1000 and having at least one conjugated double bond, and has an alkoxyl group content of from 0.0005 to 1 mol%, an ethylene content of from 5 to 60 mol%, and a degree of saponification of at least 85 mol% wherein the alkoxyl group has the formula -O-R, wherein R indicates an alkyl group having from 1 to 5 carbon atoms.

2. The saponified ethylene-vinyl acetate copolymer as claimed in claim 1, which contains from 10 to 5000 ppm, in terms of the free acid, of a higher fatty acid or its derivative.

3. The saponified ethylene-vinyl acetate copolymer as claimed in claim 1 or 2, which contains from 10 to 5000 ppm, in terms of the boron element, of a boron compound.

4. A single-layered extrusion product of the saponified ethylene-vinyl acetate copolymer of any one of claims 1 to 3; or a multi-layered coextrusion product containing a layer of the saponified ethylene-vinyl acetate copolymer.

5. A method for producing the saponified ethylene-vinyl acetate copolymer of claim 1, which comprises adding a compound having a molecular weight of at most 1000 and having at least one conjugated double bond to an ethylene-vinyl acetate copolymer obtainable through polymerization in the presence of an alkoxyl group-having polymerization initiator, followed by saponifying the copolymer.

6. The method of claim 5 wherein saponifying the copolymer is followed by adding thereto a higher fatty acid or its derivative and/or a boron compound, and wherein the saponified ethylene-vinyl acetate copolymer contains from 10 to 5000 ppm, in terms of the free acid, of a higher fatty acid or its derivative and/or from 10 to 5000 ppm, in terms of the boron element, of a boron compound.

7. A method for producing a single-layered extrusion product of a saponified ethylene-vinyl acetate copolymer, or a multi-layered coextrusion product containing a layer of a saponified ethylene-vinyl acetate copolymer, which comprises processing, in a mode of single-layer extrusion or multi-layer coextrusion, a saponified ethylene-vinyl acetate copolymer obtainable by adding a compound having a molecular weight of at most 1000 and having at least one conjugated double bond to an ethylene-vinyl acetate copolymer prepared through polymerization in the presence of an alkoxyl group-having polymerization initiator, followed by saponifying the copolymer.

8. The method of claim 7 wherein saponifying the copolymer is followed by adding thereto a higher fatty acid or its derivative and/or a boron compound.

## Patentansprüche

1. Verseiftes Ethylen-Vinylacetat-Copolymer, das 0,1 bis 3000 ppm einer Verbindung mit einem Molekulargewicht von höchstens 1000 und mit mindestens einer konjugierten Doppelbindung enthält und das einen Alkoxylgruppengehalt von 0,0005 bis 1 Mol-%, einen Ethylengehalt von 5 bis 60 Mol-% und einen Verseifungsgrad von mindestens 85 Mol-% aufweist, wobei die Alkoxylgruppe die Formel ―O―R hat, wobei R einen Alkylrest mit 1 bis 5 Kohlenstoffatomen bedeutet.

2. Verseiftes Ethylen-Vinylacetat-Copolymer nach Anspruch 1, welches 10 bis 5000 ppm, ausgedrückt als freie Säure, einer höheren Fettsäure oder ihres Derivats enthält.

3. Verseiftes Ethylen-Vinylacetat-Copolymer nach Anspruch 1 oder 2, welches 10 bis 5000 ppm, ausgedrückt als Borelement, einer Borverbindung enthält.

4. Einschichtiges Extrusionsprodukt des verseiften Ethylen-Vinylacetat-Copolymers nach einem der Ansprüche 1 bis 3 oder ein mehrschichtiges Coextrusionsprodukt, das eine Schicht des verseiften Ethylen-Vinylacetat-Copolymers enthält.

5. Verfahren zur Herstellung des verseiften Ethylen-Vinylacetat-Copolymers nach Anspruch 1, welches die Zugabe einer Verbindung mit einem Molekulargewicht von höchstens 1000 und mit mindestens einer konjugierten Doppelbindung zu einem Ethylen-Vinylacetat-Copolymer, welches durch Polymerisation in Gegenwart eines Alkoxylgruppen enthaltenden Polymerisationsinitiators erhältlich ist, gefolgt von Verseifung des Copolymers umfaßt.

6. Verfahren nach Anspruch 5, wobei auf das Verseifen des Copolymers die Zugabe einer höheren Fettsäure oder ihres Derivats und/oder einer Borverbindung dazu folgt und wobei das verseifte Ethylen-Vinylacetat-Copolymer 10 bis 5000 ppm, ausgedrückt als freie Säure, einer höheren Fettsäure oder ihres Derivats und/oder 10 bis 5000 ppm, ausgedrückt als Borelement, einer Borverbindung enthält.

7. Verfahren zur Herstellung eines einschichtigen Extrusionsprodukts eines verseiften Ethylen-Vinylacetat-Copolymers oder eines mehrschichtigen Coextrusionsprodukts, das eine Schicht eines verseiften Ethylen-Vinylacetat-Copolymers enthält, welches das Verarbeiten, im Einschicht-Extrusions- oder Mehrschicht-Coextrusionsmodus, eines verseiften Ethylen-Vinylacetat-Copolymers, welches durch Zugabe einer Verbindung mit einem Molekulargewicht von höchstens 1000 und mit mindestens einer konjugierten Doppelbindung zu einem Ethylen-Vinylacetat-Copolymer erhältlich ist, das durch Polymerisation in Gegenwart eines Alkoxylgruppen enthaltenden Polymerisationsinitiators hergestellt wurde, gefolgt von Verseifen des Copolymers umfaßt.

8. Verfahren nach Anspruch 7, wobei auf das Verseifen des Copolymers die Zugabe einer höheren Fettsäure oder ihres Derivats und/oder einer Borverbindung dazu folgt.

## Revendications

1. Copolymère éthylène-vinyle acétate saponifié, qui contient de 0,1 à 3 000 ppm d'un composé ayant une masse moléculaire au maximum égale à 1 000 et ayant au moins une double liaison conjuguée, et qui possède une teneur en groupes alcoxyles de 0,0005 à 1% molaires, une teneur en éthylène de 5 à 60% molaires et un degré de saponification d'au moins 85% molaires, dans lequel le groupe alcoxyle a pour formule -O-R, où R désigne un groupe alkyle ayant de 1 à 5 atomes de carbone.

2. Copolymère éthylène-vinyle acétate saponifié selon la revendication 1, qui contient de 10 à 5 000 ppm, ramenées à l'acide libre, d'un acide gras supérieur ou de son dérivé.

3. Copolymère éthylène-vinyle acétate saponifié selon la revendication 1 ou la revendication 2, qui contient de 10 à 5 000 ppm, ramenées à l'élément de bore, d'un composé du bore.

4. Produit d'extrusion monocouche du copolymère éthylène-vinyle acétate saponifié selon l'une quelconque des revendications 1 à 3, ou produit de coextrusion multicouche contenant une couche du copolymère éthylène-vinyle acétate saponifié.

5. Procédé de fabrication du copolymère éthylène-vinyle acétate saponifié selon la revendication 1, qui comprend l'addition d'un composé ayant une masse moléculaire au maximum égale à 1 000 et possédant au moins une double liaison conjuguée à un copolymère éthylène-vinyle acétate susceptible d'être obtenu par polymérisation en présence d'un amorceur de polymérisation possédant un groupe alcoxyle, suivie d'une saponification du copolymère.

6. Procédé selon la revendication 5, dans lequel la saponification du copolymère est suivie de l'addition à ce dernier d'un acide gras supérieur ou de son dérivé et/ou d'un composé du bore et dans lequel le copolymère éthylène-vinyle acétate saponifié contient de 10 à 5 000 ppm, ramenées à l'acide libre, d'un acide gras supérieur ou de son dérivé et/ou de 10 à 5 000 ppm, ramenées à l'élément bore, d'un composé du bore.

7. Procédé de fabrication d'un produit d'extrusion monocouche d'un copolymère éthylène-vinyle acétate saponifié ou d'un produit de coextrusion multicouche contenant une couche d'un copolymère éthylène-vinyle acétate saponifié, lequel procédé comprend le traitement, dans un mode d'extrusion monocouche ou de coextrusion multicouche, d'un copolymère éthylène-vinyle acétate saponifié susceptible d'être obtenu par addition d'un composé ayant une masse moléculaire au maximum égale à 1 000 et possédant au moins une double liaison conjuguée à un copolymère éthylène-vinyle acétate préparé par polymérisation en présence d'un amorceur de polymérisation possédant un groupe alcoxyle, suivie d'une saponification du copolymère.

8. Procédé selon la revendication 7, dans lequel la saponification du copolymère est suivie de l'addition à ce dernier d'un acide gras supérieur ou de son dérivé et/ou d'un composé du bore.
